# EUROPEAN PATENT SPECIFICATION

(11) **EP 3 280 298 B1**
(45) Date of publication and mention of the grant of the patent: **12.06.2019**
(21) Application number: 16711229.1
(22) Date of filing: 17.03.2016
(51) Int. Cl.: A47J 31/18, A47J 31/40, A47J 31/44, A47J 31/56

(54) **A TURKISH COFFEE MACHINE AND CONTROL METHOD THEREOF**
MASCHINE FÜR TÜRKISCHEN KAFFEE UND STEUERUNGSVERFAHREN DAFÜR
MACHINE À CAFÉ TURC ET SON PROCÉDÉ DE COMMANDE

(30) Priority: 06.04.2015 TR 201504198
(43) Date of publication of application: 14.02.2018
(73) Proprietor: Arçelik Anonim Sirketi, 34950 Istanbul (TR)
(72) Inventor: BUYUKTOPCU, Cagatay, 34950 Istanbul (TR); AKGUL, Ozkan, 34950 Istanbul (TR); CENGIZ, Osman, 34950 Istanbul (TR)
(86) International application number: PCT/EP2016/055837
(87) International publication number: WO 2016/162181

(56) References cited:
- EP-A1- 2 700 338
- EP-A2- 2 088 904
- WO-A2-2004/069013
- WO-A2-2008/068224
- CN-U- 203 723 913

## Description

The present invention relates to a Turkish coffee machine wherein the brewing receptacle into which the user places coffee and water is placed into a brewing chamber in the body.

In particular in cooking machines wherein Turkish coffee can be prepared, the coffee is brewed by heating from below the brewing receptacles such as the pot, wherein the coffee is brewed. In this type of coffee machines, the user places coffee, water and in his/her preference, sugar into the brewing receptacle. In case the user puts the coffee after the water into the brewing receptacle, the problem of the coffee failing to mix with water and deposit occurs. In order to solve this problem, in the state of the art mixers are used, disposed into the brewing receptacle and driven by a motor, etc. In this type of embodiments the coffee may leave residues on the mixer and the cleaning of the mixer may be difficult for the user. Moreover, the production costs increase due to the mechanical components used.

In the state of the art Turkish Patent Application No. TR200100549, a coffee machine is disclosed, that comprises a mixing mechanism providing the mixing of the coffee and the water.

In the state of the art International Patent Application No. WO2013139820, a coffee machine is disclosed, comprising a mixer arm. In the state of the art International Patent Application No WO2004069013, a coffee machine comprising a sensor for measuring the level of the water-coffee mixture in the brewing receptacle, a heater disposed below the brewing chamber and a movement mechanism for enabling the heater to be moved is disclosed.

The aim of the present invention is the realization of a coffee machine wherein the water and the coffee put into the brewing receptacle are mixed in a simple manner.

The coffee machine realized in order to attain the aim of the present invention, explicated in the claims, comprises a control unit that decides if the coffee-water mixture in a brewing receptacle is mixed by means of a level sensor used in controlling if the brewing process is completed, that, in case the coffee is not mixed with water, enables the brewing receptacle to be moved downwards by means of a movement mechanism providing the movement of a heater and to be stopped suddenly, thus providing the mixing of the coffee-water mixture. After the user puts water and coffee and additional ingredients such as sugar as per his/her preference into the brewing receptacle and places the brewing receptacle into the brewing chamber, the control unit measures the level of the mixture in the brewing receptacle by means of the level sensor. Afterwards, the control unit compares the measured value with the values recorded in its memory and decides if the coffee-water mixture is mixed. In case of no mixing, the brewing receptacle is moved by means of the movement mechanism, thus providing the mixing of the coffee-water mixture.

In an embodiment of the present invention, the control unit operates the movement mechanism until the coffee-water mixture is properly mixed. When the value measured by the level sensor matches with the values recorded in the memory of the control unit, the control unit decides that there is a proper mixing. In this embodiment, the brewing receptacle is movement by means of the movement mechanism until the level value measured continuously by the level sensor matches with the limit values in the memory of the control unit.

In another embodiment of the present invention, after the coffee-water mixture is observed to start to intermix, in other words as the values measured by the level sensor approaches the limit values in the memory of the control unit, the heater is operated and the brewing process is started. Thus, by shortening the brewing process of the coffee, the user satisfaction is improved.

In another embodiment of the present invention, the control unit intermittently operates the movement mechanism. By waiting for a predetermined time between the successive movements, the coffee is enabled to deposit.

In another embodiment of the present invention, in order to precisely control the heat transferred to the brewing receptacle, the heater is powered only when the value measured by the level sensor is below the values recorded in the memory of the control unit and is lifted up by means of the movement mechanism, thus contacts the brewing receptacle and realizes the heating function.

The coffee machine of the present invention is controlled by a control method that is executed by the control unit for mixing the coffee-water mixture and that comprises the steps of:
- Moving the brewing receptacle upwards by means of the movement mechanism,
- Measuring the level of the coffee-water mixture in the brewing receptacle by the level sensor,
- Comparing the measured value with the values recorded in the memory of the control unit,
- Moving the brewing receptacle downwards and suddenly stopping the same by means of the movement mechanism if the coffee-water mixture is not mixed according to the comparison, and
- Stopping the movement mechanism when the heater contacts the brewing receptacle and operating the heater to start the brewing process if the coffee-water mixture is mixed according to the comparison.

In the coffee machine of the present invention, in order for the brewed Turkish coffee to taste good and for the customer satisfaction to be improved, it is detected if the coffee-water mixture in the brewing receptacle is mixed and if there is no mixing, the mixture is realized by rapidly moving the brewing receptacle downwards and suddenly stopping the same by means of the movement mechanism. Since no component of the movement mechanism is located in the brewing receptacle, the cleaning of the brewing receptacle does not become more difficult.

The coffee machine realized to attain the aim of the present invention is illustrated in the attached figures, where:

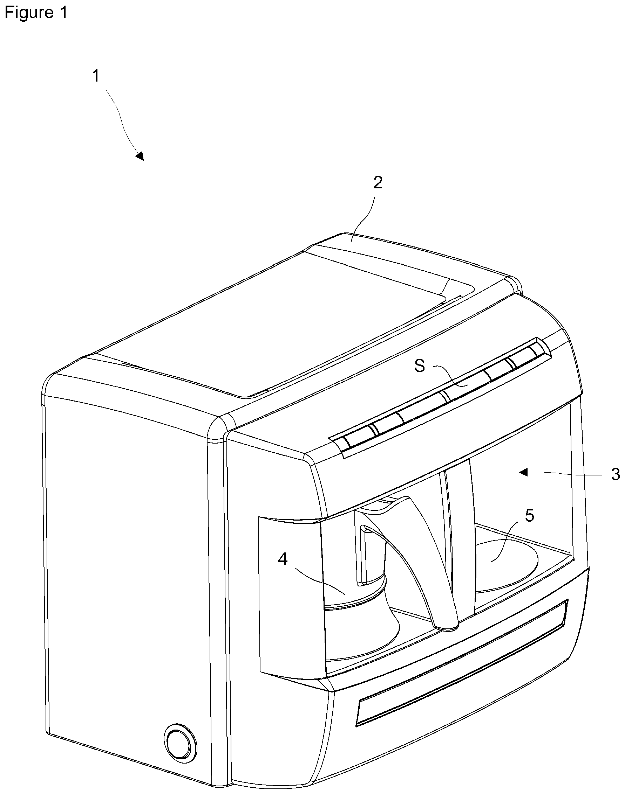

Figure 1 - is the perspective view of a coffee machine.

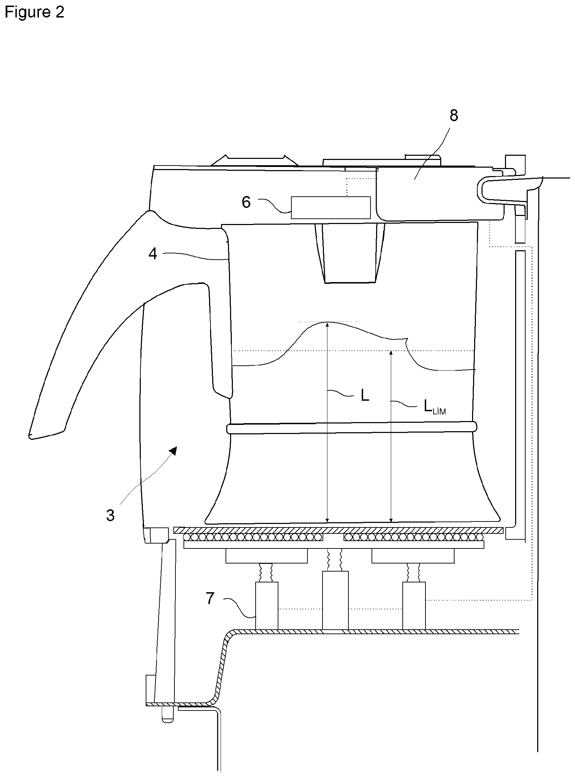

Figure 2 - is the schematic view of the brewing chamber and the movement mechanism in an embodiment of the present invention.

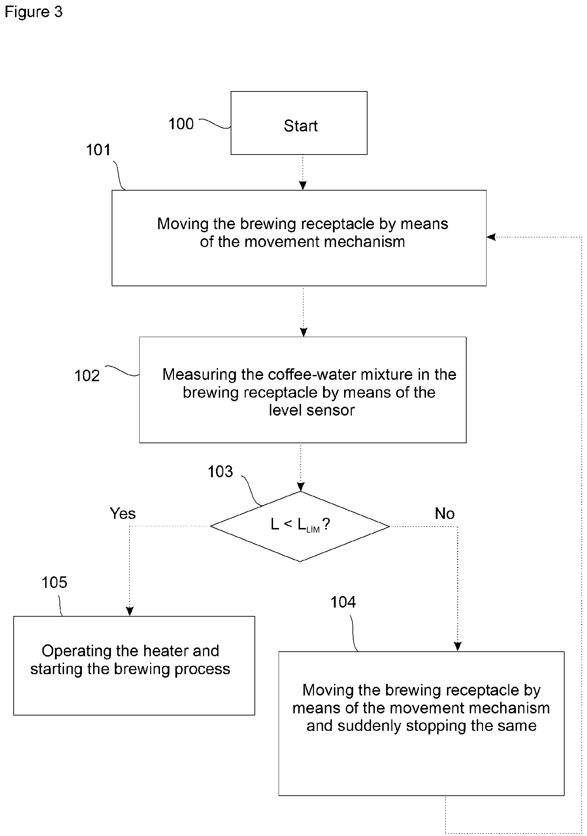

Figure 3 - is the flow chart of the control method of the present invention.

The elements illustrated in the figures are numbered as follows:
1. Coffee machine
2. Body
3. Brewing chamber
4. Brewing receptacle
5. Heater
6. Level sensor
7. Movement mechanism
8. Control unit
S. Start button
L. Water-coffee mixture level
Llim. Limit level value
100. Putting the coffee-water mixture into the brewing receptacle and placing the same into the brewing chamber and operating the coffee machine by pressing the start button
101. Moving the brewing receptacle upwards by means of the movement mechanism
102. Measuring the level of the coffee-water mixture in the brewing receptacle by the level sensor
103. Comparing the measured value with the limit level value by the control unit
104. Moving the brewing receptacle downwards and suddenly stopping the same by the movement mechanism by deciding that the coffee is not mixed with water if the measured value is above the limit level value
105. Deciding that the coffee is mixed with water by the control unit if the measured value is below the limit level value and starting the brewing process by operating the heater.

The coffee machine (1) comprises a body (2); at least one brewing chamber (3) that is disposed in the body (2); at least one brewing receptacle (4) that is placed into the brewing chamber (3) and wherein water, coffee and as per the preference additional ingredients such as sugar are put and brewed; a heater (5) that is disposed below the brewing chamber (3) and that enables the brewing receptacle (4) to be heated; a level sensor (6) that is disposed at the ceiling of the brewing chamber (3), that faces towards the brewing receptacle (4) and that measures the level (L) of the water-coffee mixture in the brewing receptacle (4), and a movement mechanism (7) that, at the beginning of the brewing process, enables the heater (5) to be moved upwards and to contact the base of the brewing receptacle (4).

In the coffee machine (1), the user puts water and coffee into the brewing receptacle (4) and places the same into the brewing chamber (3) and starts the brewing process by pressing the start button (S). In the brewing process, the heater (5) contacts the brewing receptacle (4) from below and provides the brewing of Turkish coffee. By means of the level sensor (6), the raising of the foam on the coffee is detected and it is decided if the brewing process is completed. During the brewing process the movement mechanism (7) moves the heater (5) up and down and provides heat transfer to the brewing receptacle (4). While brewing coffee, especially brewing Turkish coffee, the control of the amount of heat transferred to the brewing receptacle (4) is very important. The heater (5) can be movement up and down by means of the movement mechanism (7). Thus, as the brewing process is completed, the movement mechanism (7) moves the heater (5) downwards and cuts the contact between the brewing receptacle (4) and the heater (5).

The coffee machine (1) of the present invention comprises a control unit (8) that decides that the coffee-water mixture is not mixed if the water-coffee mixture level (L) measured by the level sensor (6) is above a limit level value (Llim) predetermined according to the amount of coffee to be brewed before the brewing process and thereby enables the heater (5) to be moved downwards together with the brewing receptacle (4) by means of the movement mechanism (7) and enables the coffee to deposit with the effect of a sudden stop at the lowermost position, thus providing the mixing of the coffee-water mixture.

The control unit (8) compares the water-coffee mixture level (6) measured by the level sensor (6) with the predetermined water-coffee mixture limit level values (Llim) that are obtained according to the experiments conducted by the producer according to the number of coffees to be brewed, for example one cup or two cups, selected by the user after placing the brewing receptacle (4) into the brewing chamber (3). When the coffee in the brewing receptacle (4) does not mix with water and rests on the surface of water, the level measured by the level sensor (6) is above the water-coffee mixture limit level values (Llim). In this case, the control unit (8) decides that the coffee does not deposit in the water and operates the movement mechanism (7), thus enabling the brewing receptacle (4) to be moved downwards and to be suddenly stopped. With the impact effect that the brewing receptacle (4) applies to the coffee-water mixture at its lowermost position, the coffee on the surface of the water deposits and mixes with the water.

In an embodiment of the present invention, the control unit (8) enables the brewing receptacle (4) to be repetitively moved by means of the movement mechanism (7) until the water-coffee mixture level (L) measured by the level sensor (6) reaches the predetermined limit level value (Llim). In this embodiment, after the movement mechanism (7) is operated, the control unit (8) measures the water-coffee mixture level (L) by means of the level sensor (6) at certain intervals and continues to operate the movement mechanism (7) upwards and downwards until the measure value (L) reaches the limit level value (Llim). With the repetitive movement of the brewing receptacle (4), the coffee and the water are properly mixed and the water-coffee mixture level (L) measured by the level sensor (6) falls below the limit level value (Llim). When the water-coffee mixture level (L) measured by the level sensor (6) is below the limit level value (Llim), the movement mechanism (7) is stopped at the upper position, in other words at the brewing position wherein the heater (5) contacts the base of the brewing receptacle (4) and the heater (5) is operated and the brewing process is started.

In another embodiment of the present invention, the control unit (8) powers the heater (5) and starts the brewing process if the water-coffee mixture level (L) measured by the level sensor (6) changes toward the predetermined limit level value (Llim) within a predetermined time period. In this embodiment, the level sensor (6) performs measurements at certain intervals and if the measured values (L) decrease in the course of time and approach the limit level values (Llim), the heater (5) is operated and the brewing process is started. In this embodiment, the heater (5) is powered and the brewing process is started without waiting the value (L) measured by the level sensor (6) to reach (decrease) the limit level value (Llim), in other words, the brewing receptacle (4) is moved upwards and downwards until the coffee deposits in the water and at the same time the heater (5) is operated the brewing process is continued, and the time the user waits is decreased.

In another embodiment of the present invention, the control unit (8) enables the movement mechanism (7) to be operated at intervals. In this embodiment, the movement mechanism (7) is operated intermittently and between two movements it is waited for a period of time and the coffee is allowed to mix with water.

In another embodiment of the present invention, before the heater (5) is operated at the beginning of the brewing process, the control unit (8) only enables the brewing receptacle (4) to be moved upwards by means of the movement mechanism (7) and then, if the water-coffee mixture level (L) measured by the level sensor (6) is below the predetermined limit level value (Llim), operates the heater (5). Operating the heater (5) means that the heater (5) performs the function of heating. In this embodiment, the heating is not carried out until the coffee mixes with the water and only after the coffee mixes with the water, the heater (5) carries out the function of heating. Thus, in particular in the process of brewing Turkish coffee, the important matter is to precisely control the amount of heat transferred to the coffee-water mixture.

The control method of the present invention is used in the above-disclosed coffee machine (1), and executed by the control unit (8) in order to provide the mixing of the coffee-water mixture in the brewing receptacle (4), comprising the steps of
- putting the coffee-water mixture into the brewing receptacle (4) and placing the same into the brewing chamber (3) and operating the coffee machine (1) by pressing the start button (S) (100),
- moving the brewing receptacle (4) upwards by means of the movement mechanism (7) (101),
- measuring the coffee-water level (L) inside the brewing receptacle (4) by the level sensor (6) (102),
- comparing the measured water-coffee mixture value (L) with the limit level value (Llim) by the control unit (8) (103),
- moving the brewing receptacle (4) downwards and suddenly stopping the same by the movement mechanism (7) by deciding that the coffee is not mixed with water if the measured water-coffee mixture level (L) is above the limit level value (Llim) (104),
- returning to the step (101).
- deciding that the coffee is mixed with water by the control unit (8) if the measured water-coffee mixture level (L) is below the limit level value (Llim) and starting the brewing process by operating the heater (5) (105).

In the coffee machine (1) of the present invention, the movement mechanism (7), which enables the brewing receptacle (4) to be movement upwards and downwards to mix the coffee-water mixture, is used and the need for using mechanical components such as mixer, etc. in the brewing receptacle (4) is eliminated. Thus, the cleaning of the brewing receptacle (4) is facilitated and moreover, the user is not required to mix the bring receptacle (4).

## Claims

1. A coffee machine (1) **comprising** a body (2); at least one brewing chamber (3) that is disposed in the body (2); at least one brewing receptacle (4) that is placed into the brewing chamber (3) and wherein water, coffee and as per the preference additional ingredients such as sugar are put and brewed; a heater (5) that is disposed below the brewing chamber (3) and that enables the brewing receptacle (4) to be heated; a level sensor (6) that is disposed at the ceiling of the brewing chamber (3), that faces towards the brewing receptacle (4) and that measures the level (L) of the water-coffee mixture in the brewing receptacle (4), and a movement mechanism (7) that, at the beginning of the brewing process, enables the heater (5) to be moved upwards and to contact the base of the brewing receptacle (4), **characterized by** a control unit (8) that decides that the coffee-water mixture is not mixed if the water-coffee mixture level (L) measured by the level sensor (6) is above a limit level value (Llim) predetermined according to the amount of coffee to be brewed before the brewing process and thereby enables the heater (5) to be moved downwards by means of the movement mechanism (7) and enables the coffee to deposit with the effect of a sudden stop at the lowermost position, thus providing the mixing of the coffee-water mixture.

2. A coffee machine (1) as in Claim 1, **characterized by** the control unit (8) that enables the brewing receptacle (4) to be repetitively moved by means of the movement mechanism (7) until the water-coffee mixture level (L) measured by the level sensor (6) reaches the predetermined limit level value (Llim).

3. A coffee machine (1) as in Claim 1 or 2, **characterized by** the control unit (8) that powers the heater (5) and starts the brewing process if the water-coffee mixture level (L) measured by the level sensor (6) changes toward the predetermined limit level value (Llim) within a predetermined time period.

4. A coffee machine (1) as in Claim 1, **characterized by** the control unit (8) that enables the movement mechanism (7) to be operated at intervals.

5. A coffee machine (1) as in Claim 1, **characterized by** the control unit (8) that only enables the brewing receptacle (4) to be moved upwards by means of the movement mechanism (7) before the heater (5) is operated at the beginning of the brewing process, and then, if the water-coffee mixture level (L) measured by the level sensor (6) is below the predetermined limit level value (Llim), operates the heater (5).

6. A control method used in a coffee machine (1) as in the above claims, and executed by the control unit (8) in order to provide the mixing of the coffee-water mixture in the brewing receptacle (4), comprising the steps of
- putting the coffee-water mixture into the brewing receptacle (4) and placing the same into the brewing chamber (3) and operating the coffee machine (1) by pressing the start button (S) (100),
- moving the brewing receptacle (4) upwards by means of the movement mechanism (7) (101),
- measuring the coffee-water level (L) inside the brewing receptacle (4) by the level sensor (6) (102),
- comparing the measured water-coffee mixture value (L) with the limit level value (Llim) by the control unit (8) (103),
- moving the brewing receptacle (4) downwards and suddenly stopping the same by the movement mechanism (7) by deciding that the coffee is not mixed with water if the measured water-coffee mixture level (L) is above the limit level value (Llim) (104),
- returning to the step "moving the brewing receptacle (4) upwards by means of the movement mechanism (7) (101)",
- deciding that the coffee is mixed with water by the control unit (8) if the measured water-coffee mixture level (L) is below the limit level value (Llim) and starting the brewing process by operating the heater (5) (105).

## Patentansprüche

1. Eine Kaffeemaschine (1) umfasst einen Körper (2), mindestens eine Brühkammer (3) die innerhalb des Körpers (2) angeordnet ist, mindestens einen Brühbehälter (4), der in die Brühkammer (3) gestellt wird und in dessen Wasser, Laffe und nach Wahl zusätzliche Zutaten wie Zucker eingefügt und gebrüht Warden; eine Heizeinrichtung (5), die unterhalb der Brühkammer (3) angebracht ist und das Erwärmen des Brühbehälters (4) ermöglicht; einen Füllstandssensor (6), welches an der Decke der Brühkammer (3) angeordnet ist und dem Brühbehälter (4) zugewandt ist und den Füllstand (L) des Wasser-Kaffee-Mischungs innerhalb des Brühbehälters (4) misst und einen Bewegungsmechanismus (7), der zu Beginn von dem Brühvorgang es ermöglicht, dass die Heizeinrichtung (5) nach oben bewegt werden kann und die Basis des Brühbehälters (4) berührt, **gekennzeichnet wird es,** durch eine Steuereinheit (8), die es entscheidet, dass die Wasser-Kaffee-Mischung nicht gemischt wird, wenn der von dem Füllstandssensor (6) ausgemessene Wasser-Kaffee-Mischung-Füllstand (L) über einen nach dem vorgegebenen Grenzstandwert (Llim) für die Kaffeemenge liegt, die vor dem Brühvorgang gebrüht werden soll und dadurch ermöglicht, dass die Heizeinrichtung (5) mithilfe des Bewegungsmechanismus (7) nach unten bewegt werden kann und somit dem Kaffee es ermöglicht, sich unter der Wirkung eines plötzlichen Stopps an der untersten Position abzulagern, damit das Mischen der Wasser-Kaffee-Mischung erreicht wird.

2. Eine Kaffeemaschine (1), wie in Anspruch 1 aufgeführt, **ist dadurch gekennzeichnet, dass** die Steuereinheit (8) eine wiederholte Bewegung des Brühbehälters (4) mithilfe des Bewegungsmechanismus (7) ermöglicht, bis der vom Füllstandssensor (6) gemessene Wasser-Kaffee-Mischungsstand (L) den vorgegebenen Grenzstandwert (Llim) erreicht.

3. Eine Kaffeemaschine (1), wie in Anspruch 1 oder 2 aufgeführt, **ist dadurch gekennzeichnet, dass** die Steuereinheit (8) die Heizeinrichtung (5) antreibt und somit den Brühvorgang startet, wenn der Wasser-Kaffeegemischstand (L) durch den Füllstandsensor (6) gemessen wird, ändert sich innerhalb einer vorbestimmten Zeitspanne zu dem vorbestimmten Grenzpegelwert (Llim).

4. Eine Kaffeemaschine (1), wie in Anspruch 1 aufgeführt, **ist dadurch gekennzeichnet, dass** durch die Steuereinheit (8) der Bewegungsmechanismus (7) in intervallen betätigt werden kann.

5. Eine Kaffeemaschine (1), wie in Anspruch 1 aufgeführt, **ist dadurch gekennzeichnet, dass** nur die Steuereinheit (8) es ermöglicht, dass der Brühbehälter (4) mithilfe des Bewegungsmechanismus (7) nach oben bewegt werden kann, bevor die Heizanlage (5) zu Beginn des Bürovorgangs in Betrieb genommen wird, und dann, wenn der durch den Füllstandssensor (6) gemessene Wasser-Kaffeegemisch-Füllstand (L) unter dem vorgegebenen Grenzgrenzwert (Llim) liegt, die Heizanlage (5) betätigt.

6. Ein Steuerverfahren für die Verwendung in einer Kaffeemaschine (1) wie in den vorstehenden Ansprüchen und von der Steuereinheit (8) ausgeführt wird, um das Mischen des Kaffee-Wasser-Gemisches in dem Brühbehälter (4) bereitzustellen, umfasst die Schritte;
- dass die Kaffee-Wasser-Mischung in den Brühbehälter (4) gegeben wird und in die Brühkammer (3) gegeben wird und die Kaffeemaschine (1) durch das Drücken der Starttaste (S) (100) betätigt wird,
- dass Bewegen des Brühbehälters (4) nach oben, mithilfe der Bewegungsmechanismus (7) (101),
- dass Messen des Wasser-Kaffeegemisch-Füllstandes (L) im Brühbehälter (4) durch den Füllstandsensor (6) (102),
- dass Vergleichen des gemessenen Wasser-Kaffee-Mischungswerts (L) mit dem Grenzwert (Llim) durch die Steuereinheit (8) (103),
- dass Verschieben des Brühbehälters (4) nach unten, wenn plötzliches Stoppen entsteht, durch den Bewegungsmechanismus (7), indem entschieden wird, dass der Kaffee nicht mit Wasser gemischt wird, wenn der gemessene Wasser-Kaffeegemisch-Pegel (L) über dem Grenzwert (Llim) liegt (104),
- Rückkehr zum Schritt "Bewegen des Brühbehälters (4) mittels des Bewegungsmechanismus (7) (101) nach oben",
- die Entscheidung, dass der Kaffee von der Steuereinheit (8) mit Wasser gemischt wird, wenn der gemessene Wasser-Kaffee-Mischungsstand (L) unter dem Grenzwert (Llim) liegt, und der Brühvorgang durch das Bedienen der Heizanlage (5) (105) gestartet wird

## Revendications

1. Une machine à café (1) **comprenant** un corps (2) ; au moins une chambre de percolation (3) qui est disposée dans le corps (2) ; au moins un récipient de brassage (4) qui est placé dans la chambre de percolation (3) et où l'eau, le café et selon la préférence les ingrédients additionnels tels que le sucre sont mis et brassés ; un chauffage (5) qui est disposé sous la chambre de percolation (3) et qui permet le chauffage du récipient de brassage (4) ; un capteur de niveau (6) disposé au dessus de la chambre de percolation (3), orienté vers le récipient de brassage (4), qui mesure le niveau (L) du mélange eau-café dans le récipient de brassage (4), et un mécanisme de déplacement (7) qui, au début du processus de brassage, permet au chauffage (5) de se déplacer vers le haut et de venir en appui contre la base du récipient de brassage (4), **est caractérisé par** une unité de commande (8) qui décide que le mélange café-eau n'est pas mélangé si le niveau du mélange eau-café (L) mesuré par le capteur de niveau (6) est supérieur à une valeur limite (Llim) prédéterminée en fonction de la quantité de café à infuser avant le processus d'infusion et permet ainsi au chauffage (5) d'être déplacé vers le bas au moyen du mécanisme de mouvement (7) et de déposer le café par effet d'un arrêt soudain en position inférieure, fournissant ainsi le mélange du mélange café-eau.

2. Une machine à café (1) selon la déclaration 1, **est caractérisée par** l'unité de commande (8) qui permet de déplacer le récipient de brassage (4) de manière répétitive au moyen du mécanisme de mouvement (7) jusqu'à ce que le niveau du mélange eau-café (L) mesuré par le capteur de niveau (6) atteigne la valeur limite prédéterminée (Llim).

3. Une machine à café (1) selon la déclaration 1 ou 2, **est caractérisée par** l'unité de commande (8) qui alimente le chauffage (5) et démarre le processus d'infusion si le niveau du mélange eau-café (L) mesuré par le capteur de niveau (6) se rapproche de la valeur limite prédéterminée (Llim) pendant une période prédéterminée.

4. Une machine à café (1) comme dans la déclaration 1, **est caractérisée par** l'unité de commande (8) qui permet de faire fonctionner le mécanisme de mouvement (7) à intervalles réguliers.

5. Une machine à café (1) selon la déclaration 1, **est caractérisée par** l'unité de commande (8) qui ne permet de déplacer le récipient de brassage (4) vers le haut qu'au moyen du mécanisme de mouvement (7) avant que le chauffage (5) soit actionné au début du processus d'infusion, et ensuite, si le niveau (L) du mélange eau-café mesuré par le capteur (6) est au-dessous du niveau limite prédéterminé (Llim), commande le chauffage (5).

6. Un procédé de contrôle utilisé dans une machine à café (1) comme dans les déclarations ci-dessus, et exécuté par l'unité de contrôle (8) afin d'assurer le mélange du mélange café-eau dans le récipient de brassage (4), comprenant les étapes
- de mettre le mélange café-eau dans le récipient de brassage (4) et le placer dans la chambre de percolation (3) et de faire fonctionner la machine à café (1) en appuyant sur la touche marche (S) (100),
- de déplacer le récipient de brassage (4) vers le haut au moyen du mécanisme de déplacement (7) (101),
- de mesurer le niveau d'eau du café (L) à l'intérieur du récipient de brassage (4) par le capteur de niveau (6) (102)
- de comparer la valeur mesurée du mélange eau-café (L) avec la valeur limite (Llim) du niveau de remplissage (Llim) par l'unité de commande (8) (103),
- de déplacer le récipient de brassage (4) vers le bas et de l'arrêter brusquement par le mécanisme de mouvement (7) en décidant que le café n'est pas mélangé à de l'eau si le niveau mesuré du mélange eau-café (L) est au-dessus de la valeur limite (Llim) (104),
- de retourner à l'étape "remonter le récipient de brassage (4) au moyen du mécanisme de déplacement (7) (101)",
- de décider que le café est mélangé à de l'eau par l'unité de commande (8) si le niveau de mélange eau-café mesuré (L) est inférieur à la valeur limite (Llim) et démarrer le processus d'infusion en actionnant le chauffage (5) (105).
